# EUROPEAN PATENT APPLICATION

(11) **EP 4 163 104 A1**
(43) Date of publication of application: **12.04.2023**
(21) Application number: 22197079.1
(22) Date of filing: 22.09.2022
(51) Int. Cl.: B32B 7/12, B32B 27/08, B32B 27/30, B32B 27/32, B32B 27/34, C08J 5/18

(54) **MULTILAYER MONOAXIALLY ORIENTED CROSSLINKED FILM AND PROCESS**

(30) Priority: 05.10.2021 EP 21200919
(71) Applicant: Flexopack S.A., 194 00 Koropi (GR)
(72) Inventor: Gkinosatis, Dimitris, 19400 Koropi Attica (GR)
(74) Representative: Isarpatent

(57) **Abstract**

The present invention is directed to a monoaxially oriented, cross-linked multilayer film. The invention is further directed to a method of producing and preserving a food product using such a film, bag or pouch and to a packaged food product obtained therefrom.

## Description

The present invention is directed to a monoaxially oriented, cross-linked multilayer film. The invention is further directed to a method of producing and preserving a food product using such a film, bag or pouch and to a packaged food product obtained therefrom.

Monoaxial orientation (MDO) is a common method to produce oriented film. In the prior art there is a lot of information e.g., in patents EP 2106342, US 6,375,781, US 5,184,379 and others teaching different films produced as per this method for a variety of applications.

As many of MDO applications are to be used in food packaging, there is often a need to monoaxially orient multilayer films comprising oxygen barrier polymers, such as polyester, polyamide and EVOH. However, in the prior art there is not much information how to monoaxially orient such structures.

For example, CN 109591415 teaches the monoaxial orientation of structure PA/TIE/EVOH/TIE/PA. However, there is no further information about the processing conditions of how to improve the process, minimizing the problems mentioned above. Also, the oriented film does not comprise a polyolefin-based sealing layer, which is generally important for a food packaging film. Further, the process described is online monoaxial stretching, which is an easier process compared to offline (=when extrusion and orientation of the films are done as two different processing steps).

Vacuum skin packaging is a known packaging process in which after food is placed in a container (often a tray), air is drawn from the package prior to sealing it close. Such packaging has comparable storage and preservation characteristics to shrinkable packaging and usually is more eye appealing.

More specifically, vacuum skin packaging (VSP) is a process well known in the art using a thermoplastic packaging material to enclose a food product. The terms "vacuum skin packaging" or "VSP" as used herein indicate that the product is packaged under vacuum and the space containing the product is evacuated from gases at the moment of packaging. The top flexible film is also referred to as "skin-forming", "skin" or "upper" film.

In the vacuum skin packaging process, an article may be placed on a rigid, semi-rigid or flexible support member, that can be flat or shaped, e.g., tray-shaped, bowl-shaped or cup-shaped (called "bottom" web), and the supported article is then passed to a chamber where a "top" web is first drawn upward against a heated dome and then draped down over the article. The movement of the top web is controlled by vacuum and/or air pressure, and in a vacuum skin packaging arrangement, the interior of the container is vacuumed before final welding of the top web to the bottom web. In the VSP process, the upper heated film forms a tight skin around the product and is tightly adhered to the part of the support not covered by the product. Vacuum skin packaging is described in many references, including FR 258357, FR 1286018, AU 3491504, U.S. Re 30009, U.S. Pat. Nos. 3,574,642, 3,681,092, 3,713,849, 4,055,672, 5,346,735, WO 2009141214, EP 2722279, EP 2459448.

Vacuum skin packaging is commonly employed for packaging food products such as fresh and frozen meat and fish, cheese, processed meat, ready meals and the like. The final package presents a tight fitting, clear package which protects the food article from the external environment.

The demands imposed nowadays on the packaging films used in such vacuum skin packaging applications are particularly high: the films have to stand the heating and stretching conditions within the vacuum chamber of the packaging machine without undergoing excessive softening and perforations, they must be highly formable

Good formability is highly desirable in VSP applications to ensure that the heated film adequately conforms to the shape of the packaged product, without leaving pleats on the package surfaces or without forming protruding areas of self-adhesion of the film, at the package corners or sides. This unwanted phenomenon, known as bridging or webbing, can be so marked to extend to separate forming units in the same packaging operation. Obviously, packages showing these defects in the top skin draping are not acceptable for the consumer and therefore they have to be rejected. Other important features of VSP films include optical properties, such as glossiness and haze, which contribute to an attractive package appearance.

Moreover, VSP films must guarantee, in combination with supports of various shape and composition, an appropriate opening force in order to allow the consumer easily opening the package and taking out the packaged product. During storage, in addition to easy openability, seal and package integrity must be kept, in order to effectively preserve the product.

As well known in the art, such performance in terms of easy opening and integrity is particularly difficult to be achieved in a vacuum skin package. In fact, vacuum skin packaging processes do not apply a standard sealing step through a heated sealing bar, as for example in tray lidding packaging processes, but the adhesion of the top to the bottom is achieved through the draping of the heated top onto the entire surface of the bottom not covered by the product after removal of the vacuum from the dome. The final quality and strength of the adhesion are mainly dependent on the temperature achieved by the top, on the sealing properties of the outer surfaces and on the chemical compatibility between the sealant layers of the top and the bottom.

Films for use in a vacuum skin packaging process are generally multilayer films produced by hot blown film or cast lines. Such films are described in patents like EP 343877 or EP 243510 among others and they are generally non oriented films. It is generally beloved in the art that oriented films are not pliable enough to withstand the demanding vacuum skin packaging process.

With current advent of sustainability goals but also from an economic standpoint, it is important to use thinner films in packaging. Nowadays, the vast majority of vacuum skin packaging films used in the art have a thickness of 100 to 150 microns. It is a object to reduce this to 70 to 100 microns without sacrificing performance.

With the present invention, the inventor has managed to develop a new monoaxially oriented film that can be used efficiently in a vacuum skin packaging process.

### SUMMARY OF THE INVENTION

The present invention relates to a monoaxially oriented, cross-linked multilayer film comprising an outer layer, a sealing layer, and a core layer arranged between the outer layer and the sealing layer.

In one embodiment, the core layer comprises an oxygen barrier material, preferably EVOH, polyamide, or PVDC.

If the core layer comprises as oxygen barrier material EVOH, then preferably the EVOH comprises 24 to 50% ethylene per mol, more preferably 27 to 48% ethylene per mol, more, even more preferably, the EVOH has an ethylene content of 29 to 48% per mol.

If the core layer comprises as oxygen barrier material polyamide, then preferably the polyamide used is homo or copolymer of polyamide 6 (polycaprolactam). The polyamide used is preferably polyamide 6, polyamide 6/66, polyamide 6/66/12, or an inherently amorphous polyamide.

In alternative embodiment, the multilayer film comprises a core layer comprising a polyolefin, EVA, or a polyamide, preferably the polyolefin is LLDPE.

The multilayer film can further comprises a first abuse layer between the outer layer and the core layer and/or a second abuse layer between the core layer and the sealing layer. Preferably, the first and/or second abuse layer comprise EVA. Preferably the EVA can be used a single polymer in the first and/or second abuse layer or in a form of blend with EMA, ethylene alpha olefin copolymers, styrene polymers, or LDPE.

The multilayer film can further comprises a first tie layer between the first abuse layer and the core layer and/or a second tie layer between the core layer and the second abuse layer. Preferably, the first and/or second tie layer comprise a polyolefin, preferably LLDPE, maleic anhydride modified EVA, maleic anhydride modified polyethylene, maleic anhydride modified EMA, maleic anhydride modified elastomer, partially saponified EVA copolymer or polyurethane elastomer.

Preferably, the sealing layer comprises a polyolefin, preferably an ethylene copolymer, more preferably ethylene alpha olefin copolymer or ethylene ester copolymer, preferably EVA and/or EMA.

Preferably, the outer layer comprises a polyethylene, preferably a low-density polyethylene, a linear low-density polyethylene, a medium-density polyethylene or a high-density polyethylene.

The present invention further relates to a method for producing an oriented multilayer film according to one of the preceding claims comprising the following steps:
a) a film extrusion step
b) a crosslinking step
c) a monoaxial orientation step.

The crosslinking can be performed before the monoaxial orientation step c) or after the monoaxial orientation step c).

The present invention further relates to a monoaxially oriented, crosslinked multilayer film obtained by the above method for producing an oriented multilayer film.

The present invention further relates to the use of the above-described multilayer film in a vacuum skin packaging process. Preferably, the film is used as top lidding film.

The present invention further relates to a method of producing and preserving a food product using the above-described film, or a bag or pouch made from the above-described film, or a vacuum skin packaging, wherein the above-described film is applied as top lidding film.

The present invention further relates to a vacuum skin packaging, comprising the above-described film as top lidding film and a bottom sheets or tray.

The present invention further provides a packaged food product comprising a food product packed in the above-described vacuum skin packaging.

ester based (such as EVA and/or EMA). For being able to seal to more unconventional bottom sheets or trays like aluminum the sealing layer may comprise tackifiers or other compounds.

### DEFINITIONS

In this application the following definitions are used:
The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured in water according to ASTM 2732. For temperatures like 100°C or more, glycerine is used as a reference liquid.

The term "total heat shrinkability" refers to the sum of heat shrinkability at the MD direction and heat shrinkability at the TD direction. In all cases, ASTM 2732 is used for measurement of shrinkabilities.

The term "multilayer" refers to a film comprising 2 or more layers.

The phrase "longitudinal direction" or "machine direction" herein abbreviated "MD" refers to a direction along the length of the film.

The phrase "outer layer" refers to the film layer which comes in immediate contact with the outside environment (atmosphere). Therefore, the film has two outer layers, one at the inside of the pack and one at the outside.

The phrase "inner layer" refers to any film layer that is not "outer layer».

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein, the term "polyolefin" refers to any polymerized olefin, which can be linear, branched, cyclic, aliphatic, substituted or unsubstituted. More specifically, included in the term polyolefin are homopolymers of olefin, copolymers of olefin, copolymers of an olefin and a non-olefinic comonomer (such as ester) etc. Specific examples include polyethylene homopolymer, polypropylene homopolymer, polybutene homopolymer, ethylene alpha olefin copolymer, propylene alpha olefin copolymer, butene alpha olefin copolymer, ionomer, ethylene ester copolymer etc.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra-low density polyethylene (ULDPE), metallocene catalyzed polymers and polyethylene plastomers and elastomers.

As used herein the term "homogeneous ethylene alpha olefin copolymers" refer to ethylene alpha olefin copolymers having a molecular weight distribution less than 2.7 as measured by GPC. Typical examples of these polymers are AFFINITY from DOW or Exact from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the phrase "ethylene methacrylate copolymers" refers to copolymers of ethylene and methacrylate monomer. The monomer content is less than 40%.

As used herein the phrase "ethylene vinyl acetate copolymer" or EVA refer to copolymers of ethylene and vinyl acetate.

As used herein the phrase "ethylene ester copolymer" includes any polymer made from ethylene and ester monomers. It is obvious that this term includes EVAs, EMAs and other polymers.

As used herein the term "oxygen barrier polymer" refers to polymers which have the property to limit the passage of oxygen through a film or a layer comprising the polymer. Common materials, are EVOH, PVDC or polyamide.

As used herein, the term EVOH refers to saponified products of ethylene vinyl ester copolymers. The ethylene content is typically in the range of 25 to 50% per mol. All the later references to EVOH ethylene content will be in % per mol.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term "polyamide" refers to homopolymers and copolymers. Polyamide 6, polyamide 66, polyamide 12, polyamide 6/66, polyamide 6/12, polyamide elastomers, MXD polyamides and other copolymers are specifically useful for the invention.

As used herein the term "polyester" refers to polymers comprising terephthalate units. Examples of polyesters are PET (polyethylene terephthalate), PBT (polybutylene terephthalate), polyester elastomer (block copolymer comprising ester or ether units), PTT and other similar polymers.

As used herein, the term "ionomer" comprises the copolymers of ethylene and methacrylic or acrylic acid being metal neutralized. An example of such material is Surlyn from Dupont.

As used herein, the term "polypropylene" refers to polymers incorporating propylene structural units. Examples of these, are homo polypropylenes, random copolymers of propylene and ethylene, block copolymers of propylene and ethylene, copolymers or blends of propylene and rubber (such as blends of polypropylene and ethylene propylene rubber), propylene ethylene alpha olefin terpolymers and others.

These polymers may be isotactic, syndiotactic or atactic. Isotactic is preferred.

As used herein the term "substantially non resilient material" refers to materials or material compounds comprising inorganics like calcium carbonate, titanium dioxide, wollastonite, mica, glass fibers, dolomite, silica and the like.

All measurement methods mentioned herein are readily available for the skilled person. For example, they can be obtained from the American National Standards Institute at: www.webstore.ansi.org

All percentages are based on weight per weight ratio, except when otherwise stated.

### DETAILED DESCRIPTION

The present invention relates to a monoaxially oriented, cross-linked multilayer film comprising an outer layer, a sealing layer, and a core layer arranged between the outer layer and the sealing layer.

In one embodiment, the core layer comprises an oxygen barrier material, preferably EVOH, polyamide, or PVDC.

If the core layer comprises as oxygen barrier material EVOH, then preferably the EVOH comprises 24 to 50% ethylene per mol, more preferably 27 to 48% ethylene per mol, more, even more preferably, the EVOH has an ethylene content of 29 to 48% per mol.

If the core layer comprises as oxygen barrier material polyamide, then preferably the polyamide used is homo or copolymer of polyamide 6 (polycaprolactam). The polyamide used is preferably polyamide 6, polyamide 6/66, polyamide 6/66/12, or an inherently amorphous polyamide.

In alternative embodiment, the multilayer film comprises a core layer comprising a polyolefin, EVA, or a polyamide, preferably the polyolefin is LLDPE.

The multilayer film can further comprises a first abuse layer between the outer layer and the core layer and/or a second abuse layer between the core layer and the sealing layer. Preferably, the first and/or second abuse layer comprise EVA. Preferably the EVA can be used a single polymer in the first and/or second abuse layer or in a form of blend with EMA, ethylene alpha olefin copolymers, styrene polymers, or LDPE.

The multilayer film can further comprises a first tie layer between the first abuse layer and the core layer and/or a second tie layer between the core layer and the second abuse layer. Preferably, the first and/or second tie layer comprise a polyolefin, preferably LLDPE, maleic anhydride modified EVA, maleic anhydride modified polyethylene, maleic anhydride modified EMA, maleic anhydride modified elastomer, partially saponified EVA copolymer or polyurethane elastomer.

Preferably, the sealing layer comprises a polyolefin, preferably an ethylene copolymer, more preferably ethylene alpha olefin copolymer or ethylene ester copolymer, preferably EVA and/or EMA.

Preferably, the outer layer comprises a polyethylene, preferably a low-density polyethylene, a linear low-density polyethylene, a medium-density polyethylene or a high-density polyethylene.

The present invention further relates to a method for producing an oriented multilayer film according to one of the preceding claims comprising the following steps:
a) a film extrusion step
b) a crosslinking step
c) a monoaxial orientation step.

The crosslinking can be performed before the monoaxial orientation step c) or after the monoaxial orientation step c). The film is preferably irradiated by electron beam. The irradiation dose is preferably at least 1 MRAD, more preferably at least 2 MRAD. The dose is preferably up to 20 MRAD, more preferably up to 18 MRAD.

In a preferred embodiment, the film is produced by a method incorporating high cooling speed immediately after extrusion and exit of the film from the extrusion die.

Such methods include
^{∗}cast film produced from a longitudinal die
^{∗}highly air cooled blown film produced from a tubular die
^{∗}water cooled blown film produced from a tubular die

In another preferred method the film is produced by conventional air cooled hot blown film process.

### FILM STRUCTURE

The film is generally a film comprising from 3 to more than 9 layers.

Such layers can be a sealing layer (in direct contact with the food), core layer (comprising optionally an oxygen barrier material), abuse layers, adhesive tie layers (allowing bonding between layers that have no physical adhesion), and an outer layer.

In one embodiment, the film may comprise an outer layer, a sealing layer and a core layer located between the outer and the sealing layer.

### Outer layer / core layer / sealing layer

In another embodiment the multilayer film can further comprises a first abuse layer between the outer layer and the core layer and/or a second abuse layer between the core layer and the sealing layer.
Outer layer / first abuse layer / core layer / sealing layer, or
Outer layer / core layer / second abuse layer / sealing layer, or
Outer layer / first abuse layer / core layer / second abuse layer / sealing layer

In a further embodiment the multilayer film can further comprises a first tie layer between the first abuse layer and the core layer and/or a second tie layer between the core layer and the second abuse layer.
Outer layer / first abuse layer / first tie layer / core layer / second abuse layer / sealing layer, or
Outer layer / first abuse layer / core layer / second tie layer / second abuse layer / sealing layer, or
Outer layer / first abuse layer / first tie layer / core layer / second tie layer / second abuse layer / sealing layer

### Sealing layer

The sealing layer of the film is preferably polyolefin based, more preferably ethylene copolymer based, more preferably ethylene alpha olefin copolymer based or ethylene ester based (such as EVA and/or EMA). For being able to seal to more unconventional bottom sheets or trays like aluminum the sealing layer may comprise tackifiers or other compounds.

The thickness of the sealing layer is from 5 to 100 microns, more preferably from 10 to 80 microns.

### Core layer

The film in one embodiment comprises in the core layer a high oxygen barrier material so that it protects the components of the pack from the detrimental effect of oxygen ingress. EVOH is a preferred option but also polyamide and PVDC are viable alternatives.

If the core layer comprises as oxygen barrier material EVOH, then preferably the EVOH comprises 24 to 50% ethylene per mol, more preferably 27 to 48% ethylene per mol, more, even more preferably, the EVOH has an ethylene content of 29 to 48% per mol.

If the core layer comprises as oxygen barrier material polyamide, then preferably the polyamide used is homo or copolymer of polyamide 6 (polycaprolactam). The polyamide used is preferably polyamide 6, polyamide 6/66, polyamide 6/66/12, or an inherently amorphous polyamide.

In an alternative embodiment, in cases where the food does not need a protection from oxygen, the film may comprise in the core layer a polyolefin, EVA, or a polyamide, preferably the polyolefin is LLDPE.

The thickness of the core layer can be from 3 to 20 microns, with a preferable thickness being 5 to 16 microns.

### Abuse layer(s)

Preferably, the abuse layers comprise EVA. The EVA can be alone in this layer or in a form of blend or compound. Suitable blending partners for the EVA include EMA, ethylene alpha olefin copolymers, styrene polymers, LDPE and others.

The vinyl acetate content of the EVA used in the intermediate layers is 3 to 90%, preferably 5 to 80 to 80%. Preferred melt flow indexes are 0.3 to 5 measured at 190C, 2.16 kilos.

In a further preferred version, the film comprises at least 30% per weight ethylene alpha olefin copolymers with density less than 0.920 g/cm3.

### Tie layer(s)

As well known in the art, there is no natural adhesion between polyolefins such as EVA and high barrier polymers such as EVOH. Therefore, suitable adhesive resins must be used so that the film does not collapse under the oven heating.

Suitable materials for the tie layer process include maleic anhydride modified EVA, maleic anhydride modified polyethylene, maleic anhydride modified EMA, maleic anhydride modified elastomer, partially saponified EVA copolymer and polyurethane elastomer.

### Outer layer

The outer layer of the film comprises preferably, low density polyethylene, linear low density polyethylene medium density polyethylene or high density polyethylene.

### EXAMPLES

### Example 1

### Extrusion process

A 7 layer film is produced in an air cooled how blown film line. The film structure is as follows

| | |
|---|---|
| Outer layer | 100% of linear low-density polyethylene material Dowlex NG5056E from Dow Chemical company. |
| First abuse layer | EVA having 12% per mass vinyl acetate content |
| First tie layer | LLDPE based tie layer |
| Barrier Layer | EVOH 44% mol having a melt flow index of about 2 measured at 190C, 2.16 kilos |
| Second tie layer | LLDPE based tie layer |
| Second abuse layer | EVA having 12% per mass vinyl acetate content |
| Sealing layer | 70% metallocene LLDPE + 30% low density polyethylene |

Thickness of different layers are as follows
30/30/20/20/20/30/30 with total thickness 180 microns

### MDO process

Then the film was monoaxially oriented using a well-known in the art monoaxial orientation process. The film produced by the process had a total thickness of 55 microns.

### Crosslinking

The film was crosslinked at a dose of 12 Mrads.

### Example 2

A film similar to sample 1 was produced with the difference that the crosslinking process was done prior to the MDO orientation process,

### Example 3

Same film as example 1 was produced but the EVOH was replaced by amorphous polyamide Grivoty G21 supplied by company EMS.

The MDO and crosslinking process followed the example 1 with the difference that the final film thickness was 65 microns.

### Example 4

Same as example 1 but instead of EVOH the material used in the two abuse layers was used. This example is a film without any presence of oxygen barrier material.

The MDO and crosslinking process followed the example 1 with the difference that the final film thickness was 65 microns.

### Comparative example

As a comparative example a commercial vacuum skin packaging film was used (FLEXION CER 100N1 from Flexopack).

### MEASUREMENT OF VACUUM SKIN PACKAGING PERFORMANCE

The five films were tested as per their vacuum skin packaging performance in a Sealpac machine. 20 meat pieces were used for evaluation of each one having as reference the forming capabilities of each one and the presentation of the packs.

| FILM REFERENCE | TOTAL NUMBER OF PACKS | NUMBER OF ACCEPTABLE PACKS |
|---|---|---|
| Example 1 | 20 | 17 |
| Example 2 | 20 | 18 |
| Example 3 | 20 | 15 |
| Example 4 | 20 | 16 |
| Comparative Example | 20 | 17 |

## Claims

1. A monoaxially oriented, cross-linked multilayer film comprising
an outer layer,
a sealing layer, and
a core layer arranged between the outer layer and the sealing layer.

2. The multilayer film according to claim 1, wherein the core layer comprises an oxygen barrier material, preferably EVOH, polyamide, or PVDC.

3. The multilayer film according to claim 2, wherein the EVOH comprises preferably 24 to 50% ethylene per mol, more preferably 27 to 48% ethylene per mol, more, even more preferably, the EVOH has an ethylene content of 29 to 48% per mol.

4. The multilayer film according to claim 2, wherein the polyamide used is homo or copolymer of polyamide 6 (polycaprolactam). The polyamide used is preferably polyamide 6, polyamide 6/66, polyamide 6/66/12, or an inherently amorphous polyamide.

5. The multilayer film according to claim 1, wherein the core layer comprises a polyolefin, EVA, or a polyamide, preferably the polyolefin is LLDPE.

6. The multilayer film according to one of the preceding claims, wherein the film further comprises a first abuse layer between the outer layer and the core layer and/or a second abuse layer between the core layer and the sealing layer, preferably the first and/or second abuse layer comprise EVA, preferably the EVA can be used a single polymer in the first and/or second abuse layer or in a form of blend with EMA, ethylene alpha olefin copolymers, styrene polymers, or LDPE.

7. The multilayer film according to one of the preceding claims, wherein the film further comprises a first tie layer between the first abuse layer and the core layer and/or a second tie layer between the core layer and the second abuse layer.

8. The multilayer film according to claim 7, wherein the first and/or second tie layer comprise a polyolefin, preferably LLDPE, maleic anhydride modified EVA, maleic anhydride modified polyethylene, maleic anhydride modified EMA, maleic anhydride modified elastomer, partially saponified EVA copolymer or polyurethane elastomer.

9. The multilayer film according to one of the preceding claims, wherein the sealing layer comprises a polyolefin, preferably an ethylene copolymer, more preferably ethylene alpha olefin copolymer or ethylene ester copolymer, preferably EVA and/or EMA.

10. The multilayer film according to one of the preceding claims, wherein the outer layer comprises a polyethylene, preferably a low-density polyethylene, a linear low-density polyethylene, a medium-density polyethylene or a high-density polyethylene.

11. A method for producing an oriented multilayer film according to one of the preceding claims comprising the following steps:
a) a film extrusion step
b) a crosslinking step
c) a monoaxial orientation step.

12. The method for producing a multilayer film according to claim 11, wherein the crosslinking is performed before the monoaxial orientation step c) or after the monoaxial orientation step c).

13. A monoaxially oriented, crosslinked multilayer film obtained by a method according to one the claims 11 to 12.

14. Use of the multilayer film according to one of the claims 1 to 10 or 13 in a vacuum skin packaging process.

15. Use according to claim 14, wherein the film is used as top lidding film.
